# EUROPÄISCHE PATENTANMELDUNG

(11) **EP 3 032 732 A2**
(43) Veröffentlichungstag der Anmeldung: **15.06.2016**
(21) Anmeldenummer: 15184404.0
(22) Anmeldetag: 09.09.2015
(51) Int. Cl.: H02M 7/00

(54) **UMRICHTER**

(30) Priorität: 13.12.2014 DE 102014018665
(71) Anmelder: Baumüller Nürnberg GmbH, 90482 Nürnberg (DE)
(72) Erfinder: LELKES, András, 90491 Nürnberg (DE)
(74) Vertreter: FDST Patentanwälte

(57) **Zusammenfassung**

Die Erfindung betrifft einen Umrichter (4) mit einem eine Bewegungsregelung (16) aufweisenden Regelteil (12) und einem einen Leistungshalbleiterschalter (36) umfassenden Leistungsteil (30). Das Leistungsteil (30) weist eine eine Sicherheitsfunktion (54, 56) bereitstellende Sicherheitsüberwachung (52) auf.

## Beschreibung

Die Erfindung betrifft einen Umrichter mit einem eine Bewegungsregelung aufweisenden Regelteil und einem einen Leistungshalbleiterschalter umfassenden Leistungsteil.

Industrieanlagen weisen üblicherweise eine Vielzahl an rotierenden elektrischen Maschinen auf, mittels derer beispielsweise Werkzeuge oder Förderbänder angetrieben werden. Die hierfür benötigte elektrische Energie wird mittels Umrichtern bereitgestellt, die jeweils ein Regelteil und ein Leistungsteil aufweisen. Das Regelteil ist signaltechnisch mit einer Prozesssteuerung gekoppelt und weist eine Drehzahlregelung auf. Die dem Regelteil zugeführten Drehzahlsignale der jeweiligen elektrischen Maschine werden ausgewertet, und die Bereitstellung der elektrischen Energie wird zur Erzielung einer bestimmten Soll-Drehzahl angepasst. Das Regelteil weist hierbei eine Elektronik auf, die mit vergleichsweise geringer elektrischer Leistung betrieben wird.

Die Bereitstellung der elektrischen Energie für die elektrische Maschine selbst erfolgt mittels des Leistungsteils, das üblicherweise einen Leistungshalbleiterschalter aufweist. Mittels des Halbleiterschalters wird ein elektrischer Stromfluss von einem Versorgernetzwerk zu der elektrischen Maschine eingestellt. Die Ansteuerung des Leistungshalbleiterschalters erfolgt mittels des Regelteils derart, dass die Drehzahl der elektrischen Maschine der von der Steuerung vorgegebenen SollDrehzahl entspricht. Die mittels des Halbleiterschalters geschalteten elektrischen Spannungen betragen üblicherweise über 800 Volt. Die geschalteten elektrischen Ströme weisen eine Stromstärke oberhalb von 1 Ampere oder 10 Ampere auf, was eine erhöhte Anforderung an die elektrische Isolierung des Leistungsteils stellt.

Um eine Verletzung von Bedienpersonal der elektrischen Maschine auszuschließen oder derartige Folgen zu vermindern, sind beispielsweise sogenannte "Not-Aus"-Schalter bekannt. Bei einer unbefugten oder ungewollten Annäherung einer Person an die elektrische Maschine wird dieser Schalter manuell betätigt, um einen Betrieb der elektrischen Maschine im Wesentlichen unverzüglich zu beenden. Hierfür ist der Schalter meist signaltechnisch mit der Prozesssteuerung gekoppelt. Mittels der Prozesssteuerung wird bei Betätigung des Schalters ein Signal an das Regelteil übermittelt, und infolgedessen wird die Bestromung der elektrischen Maschine unterbunden. Hierfür wird der Leistungshalbleiterschalter meist in einen elektrisch nicht leitenden Zustand versetzt. Folglich ist es erforderlich, das an das Regelteil übermittelte Signal oder aber das Regelteil selbst auf den jeweiligen Leistungshalbleiterschalter einzustellen. Bei einem Austausch des Umrichters oder etwaiger Komponenten hiervon, wie z.B. des Leistungshalbleiterschalters oder aber des vollständigen Leistungsteils, ist daher das Signal oder die hierdurch bewirkten Funktionen des Regelteils stets anzupassen.

Der Erfindung liegt die Aufgabe zugrunde, einen besonders geeigneten Umrichter anzugeben, bei dem zweckmäßigerweise eine Sicherheit erhöht und vorteilhafterweise ein Austausch vereinfacht ist.

Erfindungsgemäß wird diese Aufgabe durch die Merkmale des Anspruchs 1 gelöst. Vorteilhafte Weiterbildungen und Ausgestaltungen sind Gegenstand der Unteransprüche.

Der Umrichter weist ein Regelteil und ein Leistungsteil auf, die beispielsweise innerhalb des gleichen Gehäuses positioniert sind. Besonders bevorzugt jedoch weist das Regelteil ein erstes Gehäuse und das Leistungsgehäuse ein zweites Gehäuse auf, innerhalb derer die jeweiligen weiteren Bestandteile des jeweiligen Teils positioniert sind. Mit anderen Worten bilden die jeweiligen Gehäuse die Begrenzungen des Regel- bzw. Leistungsteils, wobei die beiden Gehäuse zueinander getrennt sind. Mit anderen Worten weist der Umrichter zwei Gehäuse auf, und das erste Gehäuse ist nicht gleich dem zweiten Gehäuse. Das erste Gehäuse liegt beispielsweise an dem zweiten Gehäuse an und ist an diesem insbesondere befestigt. Mit anderen Worten ist das erste Gehäuse in direktem mechanischem Kontakt mit dem zweiten Gehäuse. Alternativ hierzu ist das erste Gehäuse von dem zweiten Gehäuse beabstandet. Mit anderen Worten ist das Regelteil zu dem Leistungsteil beabstandet. Vorzugsweise ist sowohl das erste Gehäuse als auch das zweite Gehäuse gegen Masse geführt, was einerseits eine Belastung der Umgebung des Umrichters aufgrund elektromagnetischer Wellen reduziert. Auch ist die Funktionsweise des Regel- und Leistungsteils auf diese Weise gegenüber von Umwelteinflüssen verringert.

Das Regelteil weist eine Bewegungsregelung auf. Die Bewegungsregelung ist beispielsweise mittels einer elektrischen oder elektronischen Schaltung realisiert. Die für die Schaltung benötigten elektrischen Ströme sind zweckmäßigerweise kleiner oder gleich 1 A, 0,5 A, 0,2 A, 0,1 A, 50 mA, 20 mA, 10 mA oder 5 mA. Insbesondere ist der zum Betrieb erforderliche elektrische Strom größer als 1 mA, 5 mA, 10 mA oder 50 mA. Beispielsweise ist die maximale innerhalb der Bewegungsregelung anliegende elektrische Spannung kleiner oder gleich 100 V, 50 V, 25 V, 10 V oder 5 V. Insbesondere ist die elektrische Spannung größer als 1 V, 2 V oder 8 V. Beispielsweise weist das Regelteil hierfür einen Transformator auf, mittels dessen die elektrische Energie auf die geforderten Werte angepasst wird. Insbesondere ist der Transformator innerhalb des ersten Gehäuses positioniert, sofern dieses vorhanden ist. Zweckmäßigerweise ist die Potentialdifferenz der Bewegungsregelung gegenüber dem ersten Gehäuse, sofern dieses vorhanden ist, maximal 400 V, 200 V, 100 V, 50 V, 24 V, 12 V, 6 V, 5 V oder 2 V. Auf diese Weise ist eine elektrische Isolierung der Bewegungsregelung gegenüber dem ersten Gehäuse vergleichsweise kostengünstig realisierbar.

Das Leistungsteil weist einen Leistungshalbleiterschalter auf, der insbesondere Bestandteil einer Leistungsschaltung ist. Mittels der Leistungsschaltung wird bei Betrieb elektrische Energie zum Antrieb einer elektrischen Maschine bereitgestellt. Insbesondere wird mittels des Leistungshalbleiterschalters (Halbleiterschalter) eine mittels des Umrichters abgegebene elektrische Energie eingestellt. Beispielsweise umfasst der Umrichter einen Ausgang, der geeigneterweise mittels eines Anschlussterminals gebildet ist. Im Montagezustand ist mittels des Anschlussterminals, beispielsweise mittels einer Leitung, wie einem Kabel, eine elektrische Maschine (Elektromotor) elektrisch verbunden. Hierbei fließt über das Anschlussterminal und die Leitung elektrische Energie von dem Umrichter zur elektrischen Maschine. Beispielsweise ist der Leistungsschalter in Reihe mit dem Anschlussterminal geschaltet, sodass der elektrische Stromfluss mittels des Leistungshalbleiterschalters eingestellt wird. Geeigneterweise umfasst der Leistungshalbleiterschalter eine Freilaufdiode, oder eine Freilaufdiode ist parallel zum Leistungshalbleiterschalter geschaltet. Insbesondere weist der Umrichter zwei oder drei Ausgänge und vier oder sechs Leistungshalbleiterschalter auf. Die Leistungshalbleiterschalter sind zweckmäßigerweise in einer Brückenschaltung miteinander und mit den Ausgängen elektrisch kontaktiert. Mit anderen Worten umfasst das Leistungsteil eine B4- bzw. B6-Schaltung. Mittels der Leistungshalbleiterschalter ist insbesondere eine Wechselrichterseite des Umrichters realisiert. Zumindest jedoch sind die Leistungshalbleiterschalter Bestandteil der Wechselrichterseite des Leistungsteils. Geeigneterweise umfasst das Leistungsteil einen Zwischenkreis mit vorzugsweise einem Zwischenkreiskondensator. Zweckmäßigerweise wird der Zwischenkreis mittels einer Gleichrichterseite des Leistungsteils gespeist, die insbesondere mittels Dioden oder aber weiteren Halbleiterschaltern realisiert ist. Beispielsweise ist der Umrichter nach Art eines 2-Level- oder eines 3-Level-Umrichters ausgestaltet. Mit anderen Worten umfasst der Zwischenkreis zwei oder drei unterschiedliche elektrische Potentialniveaus.

Der Leistungshalbleiterschalter ist beispielsweise ein Feldeffekttransistor, insbesondere ein MOSFET, ein IGBT, ein GTO oder ein Thyristor, wie z.B. ein IGCT. Das Leistungsteil weist zweckmäßigerweise eine Kühlung des Leistungshalbleiterschalters auf. Die Kühlung ist beispielsweise ein passives Bauelement, wie z.B. ein Kühlkörper mit einer Anzahl an Kühlrippen. Beispielsweise wird der Leistungshalbleiterschalter mittels einer Flüssigkeit, wie z.B. Öl oder Wasser gekühlt, wobei der Leistungshalbleiterschalter beispielsweise innerhalb des Öls angeordnet oder aber in thermischem Kontakt mit einem die Kühlflüssigkeit führenden Leitung ist.

Das Leistungsteil weist ferner eine Sicherheitsüberwachung auf, die eine Sicherheitsfunktion umfasst. Mittels der Sicherheitsüberwachung wird bei Betrieb insbesondere das Vorhandensein eines sicherheitskritischen Signals überwacht. Ein derartiges Signal wird beispielsweise an den Umrichter von einer Steuerung signaltechnisch übermittelt. Beispielsweise ist die Sicherheitsüberwachung signaltechnisch mit einem "Not-Aus"-Schalter gekoppelt. Alternativ oder in Kombination hierzu ist die Sicherheitsüberwachung vorgesehen und eingerichtet, also ertüchtigt, Betriebsdaten des Umrichters zu erfassen, jedoch zumindest diese auszuwerten. Insbesondere werden hierzu sämtliche Betriebsdaten herangezogen, die innerhalb des Leistungsteils bekannt sind, also innerhalb des Leistungsteils erfasst und/oder verarbeitet werden. Mit anderen Worten ist die Sicherheitsüberwachung signaltechnisch mit den Sensoren des Leistungsteils gekoppelt. Auf diese Weise ist eine vergleichsweise Zeit sparende Verarbeitung der Betriebsdaten ermöglicht. Mit anderen Worten ist die Zeitspanne zwischen Erfassung der Betriebsdaten und Verarbeitung mittels der Sicherheitsüberwachung vergleichsweise gering. Beispielsweise werden sämtliche Betriebsdaten, oder jedoch nur ein bestimmter Teil der Betriebsdaten herangezogen. In einer Alternative werden der Sicherheitsüberwachung weitere Betriebsdaten zugeführt, die beispielsweise mittels der Bewegungsregelung erfasst werden. Die Betriebsdaten sind beispielsweise mittels eines Sensors erfasste Messdaten und/oder aus diesen Messdaten abgeleitete Daten.

Sofern mittels der Sicherheitsüberwachung ein sicherheitskritisches Signal erfasst wird, oder aber anhand der Betriebsdaten ein sicherheitskritischer Zustand des Umrichters erfasst wird, also anhand der Betriebsdaten das sicherheitskritische Signal selbst erzeugt wird, wird die Sicherheitsfunktion ausgeführt. Mittels der Sicherheitsfunktion wird zweckmäßigerweise der Leistungshalbleiterschalter gesteuert, oder aber eine Steuerung des Halbleiterschalters beeinflusst. Hierbei ist die Beeinflussung bzw. Steuerung derart, dass eine etwaige mit dem Umrichter verbundene elektrische Maschine in einen sicheren Zustand überführt wird. Insbesondere wird mittels der Sicherheitsfunktion eine anderweitige Steuerung des Leistungshalbleiterschalters überlagert. Mittels der Sicherheitsfunktion wird zweckmäßigerweise eine anderweitige Steuerung des Leistungshalbleiterschalters aufgehoben.

Auf diese Weise ist es ermöglicht, den Umrichter modular aufzubauen, wobei ein Austausch sowohl des Regelteils als auch des Leistungsteils im Wesentlichen unabhängig voneinander erfolgen kann. Auch ist hierfür keine vergleichsweise komplizierte Einstellung des jeweils anderen Teils auf das ausgetauschte Teil, also den ausgestellten Leistungsteil oder das ausgetauschte Regelteil erforderlich. Insbesondere sind das Regelteil und das Leistungsteil signaltechnisch mittels einer standardisierten Schnittstelle miteinander gekoppelt, was einen Austausch weiter erleichtert. Folglich ist es ermöglicht, bei einem bestehenden Umrichter das Leistungsteil gegen ein Leistungsteil mit einem veränderten Leistungshalbleiterschalter auszutauschen, wobei die Sicherheitsfunktion des Umrichters bereits auf den veränderten Leistungshalbleiterschalters angepasst ist. Somit ist keine vergleichsweise komplizierte Einstellung des Regelteils erforderlich.

Beispielsweise sind die vollständigen sicherheitskritischen Funktionen des Umrichters innerhalb der Sicherheitsüberwachung des Leistungsteils integriert. Mit anderen Worten weist das Regelteil keine weiteren Sicherheitsfunktionen auf. Auf diese Weise ist es ermöglicht, ein vergleichsweise kostengünstiges Regelteil zu erstellen, wobei bei einem Austausch des Leistungsteils keine Neubewertung des Regelteils hinsichtlich dessen Sicherheitsfunktionen erfolgen muss, was aufgrund der hierfür notwendigen Zertifizierung zu erhöhten Kosten führt. Insbesondere weist das Regelteil keine Hardwarefunktionen auf, ist also unabhängig von der konkreten hardwaretechnischen Ausgestaltung des Leistungsteils, was zu einer weiteren Modularisierung des Umrichters führt.

Beispielsweise ist der Leistungshalbleiterschalter an einem Stanzgitter angebunden und mit diesem elektrisch kontaktiert. Beispielsweise ist das Stanzgitter mit Kunststoff ummantelt, was einen elektrischen Kurzschluss vermeidet. Auf diese Weise ist ein vergleichsweise kostengünstiges Leistungsteil erstellt, wobei der maximal mittels des Stanzgitters leitbare elektrische Strom vergleichsweise hoch ist, so dass auch vergleichsweise leistungsstarke elektrische Maschinen mit dem Umrichter betrieben werden können. Alternativ hierzu umfasst das Leistungsteil eine erste Flachbaugruppe, wobei der Leistungshalbleiterschalter Bestandteil der ersten Flachbaugruppe ist. Die erste Flachbaugruppe weist eine Leiterplatte auf, an der der Leistungshalbleiterschalter befestigt ist. Insbesondere ist der Leistungshalbleiterschalter an der Leiterplatte der ersten Flachbaugruppe angelötet.

Die Leiterplatte weist vorzugsweise Leiterbahnen aus Kupfer auf, von denen zumindest eine elektrisch mit dem Leistungshalbleiterschalter elektrisch kontaktiert ist. Die Leiterbahnen der Leiterplatte sind insbesondere auf einem mit Glasfaser verstärkten Epoxidharz befestigt. Alternativ ist die Leiterplatte als flexible Leiterplatte ausgestaltet. Aufgrund der Leiterplatte ist eine Ansteuerung und Montage des Leistungshalbleiterschalters vereinfacht, wobei das Leistungsteil vergleichsweise robust ist. Zweckmäßigerweise weist die erste Flachbaugruppe weitere elektronische oder elektrische Bauteile auf, die an der Leiterplatte befestigt und vorzugsweise mit dieser elektrisch kontaktiert sind. Beispielsweise umfasst die erste Flachbaugruppe den Zwischenkreiskondensator, sofern dieser vorhanden ist, weitere Kondensatoren und/oder Widerstände, mittels derer beispielsweise eine Zwischenkreisspannung stabilisiert und/oder erzeugt wird, die an den gegenüberliegenden Elektroden des Zwischenkreiskondensators anliegt. Vorzugsweise ist mittels der ersten Flachbaugruppe die Brückenschaltung realisiert, sofern das Leistungsteil vier oder mehr Leistungshalbleiterschalter aufweist.

Beispielsweise weist die erste Flachbaugruppe die Sicherheitsüberwachung auf. Die Sicherheitsüberwachung ist beispielsweise mittels diskreter elektrische und/oder elektronischer Bauteile realisiert, die mittels einer Leiterbahn der Leiterplatte der ersten Flachbaugruppe miteinander kontaktiert sind. In einer Alternative hierzu ist die Sicherheitsüberwachung mittels einer integrierten Schaltung realisiert. Mit anderen Worten weist die integrierte Schaltung die Sicherheitsüberwachung auf. Beispielsweise ist die integrierte Schaltung, also der integrierte Schaltkreis, eine anwendungsspezifische integrierte Schaltung (ASIC), ein anwendungsspezifisches Standardprodukt (ASSP) oder aber ein programmierbarer integrierter Schaltkreis. Auf diese Weise ist eine spätere Anpassung oder Erweiterung der Sicherheitsüberwachung um zusätzliche Funktionen ermöglicht. Vorzugsweise ist die Sicherheitsüberwachung mittels eines Mikroprozessors realisiert, der insbesondere programmierbar ist.

In einer besonders bevorzugten Alternative hierzu umfasst die Sicherheitsüberwachung eine zweite Flachbaugruppe und besteht besonders bevorzugt aus dieser. Folglich wird die Sicherheitsfunktion mittels der zweiten Flachbaugruppe bereitgestellt, beispielsweise mittels eines integrierten Schaltkreises der zweiten Flachbaugruppe, der beispielsweise als ASIC oder als programmierbarer integrierter Schaltkreis, insbesondere als Mikrochip oder Mikroprozessor realisiert ist. Insbesondere erfolgt die Überwachung auf ein sicherheitskritisches Signal oder aber ein Auswerten von Betriebsdaten des Umrichters mittels der zweiten Flachbaugruppe. Die zweite Flachbaugruppe ist mit der ersten Flachbaugruppe signaltechnisch gekoppelt, sodass ein Austausch von Signalen zwischen der ersten und der zweiten Flachbaugruppe ermöglicht ist. Die zweite Flachbaugruppe ist an der ersten Flachbaugruppe befestigt, was zu einem vergleichsweise robusten Leistungsteil führt. Aufgrund der zweiten Flachbaugruppe ist eine weitere Modularisierung des Umrichters ermöglicht. Insbesondere ist es ermöglicht, die Sicherheitsüberwachung unabhängig von der ersten Flachbaugruppe zu fertigen oder aber für die zweite Flachbaugruppe eine vergleichsweise kostengünstige Leiterplatte heranzuziehen, da mittels dieser lediglich vergleichsweise geringe elektrische Ströme getragen werden müssen. Insbesondere ist die zweite Flachbaugruppe innerhalb eines Gehäuses positioniert, das an der ersten Flachbaugruppe angebunden ist.

Beispielsweise ist die zweite Flachbaugruppe an der ersten Flachbaugruppe angelötet, was zu einer vergleichsweise stabilen Verbindung zwischen den beiden Flachbaugruppen führt, wobei ein Signalaustausch zwischen den beiden Leiterplatten auch bei einer Erschütterung des Leistungsteils, beispielsweise hervorgerufen durch Vibrationen der anzutreibenden elektrischen Maschine, im Wesentlichen zu keiner Beeinträchtigung der Funktionsweise des Leistungsteils führt. Zweckmäßigerweise jedoch ist die zweite Flachbaugruppe steckbar mit der ersten Flachbaugruppe verbunden. Vorzugsweise ist die zweite Flachbaugruppe in einen Steckverbinder der ersten Flachbaugruppe gesteckt. Besonders bevorzugt ist die zweite Flachbaugruppe nach Art einer Steckkarte gefertigt. Auf diese Weise ist es ermöglicht, den Umrichter nachzurüsten und auf aktuelle Anforderungen einzustellen, indem die zweite Flachbaugruppe durch eine zweite Flachbaugruppe mit erweiterten Funktionen ersetzt wird. Mit anderen Worten wird die bestehende zweite Flachbaugruppe durch eine weitere zweite Flachbaugruppe ersetzt, deren Sicherheitsfunktion sich von der ursprünglichen zweiten Flachbaugruppe unterscheidet, oder jedoch eine weitere Sicherheitsfunktion aufweist. Zweckmäßigerweise werden bei Betrieb lediglich sicherheitsrelevante Daten zwischen der ersten und der zweiten Flachbaugruppe übertragen. Dies führt zu einem verringerten Datenvolumen und einer verringerten Fehleranfälligkeit. Bevorzugt jedoch werden zusätzlich Seriennummern oder aber ein Sicherheitslevel zwischen der ersten und der zweiten Flachbaugruppe übertragen, wobei das Sicherheitslevel zu einer bestimmten Mindestsicherheitsfunktion korrespondiert, die mittels der zweiten Flachbaugruppe realisiert werden kann. Alternativ oder in Kombination hierzu wird ein Parameterdatensatz zumindest bei der ersten Montage der zweiten Flachbaugruppe übertragen. Mittels des Parameterdatensatzes wird geeigneterweise die Sicherheitsfunktion und/oder weitere Bestandteile der Sicherheitsüberwachung parametrisiert und auf den Leistungshalbleiterschalter angepasst.

Beispielsweise wird der Betrieb mittels der Sicherheitsüberwachung der Leistungshalbleiterschalter, weiterer Komponenten des Umrichters oder die mittels des Umrichters betriebene elektrische Maschine thermisch und/oder elektrisch überwacht. Hierfür werden insbesondere geeignete Betriebsdaten des Umrichters und/oder der elektrischen Maschine mittels der Sicherheitsüberwachung ausgewertet. Derartige Betriebsdaten sind beispielsweise das Drücken eines "Not-Aus"-Schalters oder aber das Öffnen einer Tür oder Abdeckung der elektrischen Maschine, das Unterbrechen einer Lichtschranke aufgrund eines Zutritts zu der elektrischen Maschine oder des Umrichters. Beispielsweise wird die Temperatur der elektrischen Maschine, beispielsweise des Rotors und/oder Stators oder etwaiger Spulen der elektrischen Maschine mittels der Sicherheitsüberwachung überwacht. Bei Überschreiten eines Grenzwertes oder aber Annahme eines bestimmten Werts durch die jeweiligen Betriebsdaten, erfolgt die Ausführung der Sicherheitsfunktion.

Die Sicherheitsfunktion ist beispielsweise eine sichere Drehzahlbegrenzung ("Safe limited speed"; SLS), also ein Begrenzen der Drehzahl der mit dem Umrichter angetriebenen elektrischen Maschine, so dass eine Wartung der elektrischen Maschine und ein Einstellen der elektrischen Maschine ermöglicht ist, wobei aufgrund der reduzierten Drehzahl eine Verletzung der dies ausführenden Person im Wesentlichen ausgeschlossen ist. Alternativ ist die Sicherheitsfunktion ein sicheres Stillsetzen ("Safe torque off"; STO). Hierfür wird zweckmäßigerweise eine Ansteuerung des Leistungshalbleiterschalters unterbrochen und dieser in einen elektrisch nicht leitenden Zustand gebracht. Bei Ausführung der Sicherheitsfunktion wird die Energieversorgung folglich im Wesentlichen unverzüglich unterbrochen. Sofern die elektrische Maschine zum Zeitpunkt der Auslösung der Sicherheitsfunktion betrieben ist, wird diese folglich ungesteuert stillgesetzt, wobei kein Drehmoment erzeugt wird. Ferner ist auf diese Weise ein Schutz gegen einen unerwarteten Anlauf realisiert. Alternativ hierzu ist die Sicherheitsfunktion ein sicherer Betriebshalt ("Safe operating stop"; SOS), bei deren Ausführung sichergestellt ist, dass die elektrische Maschine ein definiertes Positionsfenster nicht verlässt. Insbesondere ist sichergestellt, dass der Rotor zu dem Stator lediglich eine bestimmte Winkelstellung zuzüglich einer vorher definierten Abweichung annehmen kann.

In weiteren Ausführungen ist die Sicherheitsfunktion ein "Safe stop 1" (SS1) oder "Safe stop 2" (SS2), bei dem die elektrische Maschine geregelt zum Stillstand gebracht wird und anschließend der Halbleiterschalter in einen elektrisch nicht leitenden Zustand versetzt wird oder aber die Regelung aktiv bleibt. Zweckmäßigerweise umfasst die Sicherheitsüberwachung zwei oder mehr dieser Sicherheitsfunktionen, was zu einem vergleichsweise betriebssicheren Umrichter führt. Sofern die Sicherheitsüberwachung mittels der zweiten Flachbaugruppe realisiert ist, ist die erste Flachbaugruppe zweckmäßigerweise eingerichtet und vorgesehen mit zueinander abweichenden Sicherheitsüberwachungen signaltechnisch gekoppelt zu werden. Hierbei unterscheiden sich die Sicherheitsüberwachungen zweckmäßigerweise durch die Art und Anzahl der jeweiligen Sicherheitsfunktion. Vorzugsweise wird die zweite Flachbaugruppe mittels eines Steckers an der ersten Flachbaugruppe befestigt, was einen Austausch der zweiten Flachbaugruppe und folglich ein Aufrüsten des Umrichters um bestimmte Sicherheitsfunktionen vereinfacht.

Beispielsweise umfasst die Sicherheitsüberwachung eine Diagnosefunktion, mittels derer geeigneterweise eine Sicherheitsüberprüfung des Halbleiterschalters oder aber weiterer Bestandteile des Leistungsteils erfolgt. Sofern die Sicherheitsüberwachung mit der zweiten Flachbaugruppe realisiert ist, erfolgt zweckmäßigerweise eine Diagnose der ersten Flachbaugruppe mittels der Diagnosefunktion. Alternativ oder in Kombination hierzu wird mittels der Diagnosefunktion die korrekte Ausführung der Sicherheitsfunktion und/oder weiterer Bestandteile der Sicherheitsüberwachung überwacht. Zweckmäßigerweise erfolgt ein Ausführen der Diagnosefunktion bei dem ersten Inbetriebsetzen der Sicherheitsüberwachung und/oder des Leistungsteils. Beispielsweise wird die Diagnosefunktion zyklisch, insbesondere alle 2, 3, 5, 7, 10, 14 Tage ausgeführt. Geeigneterweise wird die Diagnosefunktion nach Ausführung der Sicherheitsfunktion und/oder nach Versetzen des Umrichters in einen Betriebsmodus aus einem Stand-by-Modus oder im Stand-by-Modus ausgeführt. Auf diese Weise ist stets sichergestellt, dass der Umrichter und insbesondere die Sicherheitsüberwachung, stets ordnungsgemäß funktioniert.

Beispielsweise umfasst das Leistungsteil eine Stromregelung, anhand derer der von dem Umrichter zur elektrischen Maschine fließende elektrische Strom in Abhängigkeit eines externen, von dem Regelteil vorgegebenen Parameters geregelt wird. Mit anderen Worten ist die Stromregelung einer Regelung der Bewegungsregelung unterlagert. Auf diese Weise ist es nicht erforderlich, die Bewegungssteuerung oder weitere Komponenten des Regelteils an die konkrete Ausgestaltung des Leistungshalbleiterschalters sowie dessen Verschaltung anzupassen, da die leistungshalbleiterschalterspezifische Regelung mittels des Leistungsteils selbst erfolgt. Zweckmäßigerweise umfasst das Leistungsteil eine Treiberschaltung, mittels derer der Leistungshalbleiter gesteuert ist. Mit anderen Worten ist die Basis oder das Gate des Leistungshalbleiterschalters mittels der Treiberschaltung beaufschlagt, sofern der Halbleiterschalter einen derartigen Anschluss aufweist. Insbesondere sind die Stromregelung und die Treiberschaltung mittels eine PWM-Modulators realisiert. Mittels dessen wird das Gate des Halbleiterschalters vorzugsweise angesteuert. Zumindest jedoch wird der Halbleiterschalter anhand der Signale des PWM-Modulators gesteuert. Zweckmäßigerweise ist die Stromregelung, die Treiberschaltung bzw. der PWM-Modulator, mittels einer Schaltung der ersten Flachbaugruppe realisiert, sofern die erste Flachbaugruppe vorhanden ist. Folglich ist ein Austausch des Leistungshalbleiterschalters erleichtert, da lediglich die erste Flachbaugruppe entfernt und durch eine neue ersetzt werden muss. Eine vergleichsweise komplizierte Einstellung oder Verkabelung ist nicht erforderlich. Sofern die Sicherheitsüberwachung mittels der zweiten Flachbaugruppe realisiert ist, kann diese folglich bei einem Austausch der ersten Flachbaugruppe weiter verwendet werden, was Kosten spart.

Zweckmäßigerweise umfasst das Leistungsteil eine elektrische Spannungserfassung und/oder eine elektrische Stromerfassung. Insbesondere wird der mittels des Halbleiterschalters mit elektrischer Energie beaufschlagbare Anschluss des Leistungsteils überwacht, an dem bei Betrieb die elektrische Maschine angeschlossen ist. Beispielsweise wird eine über den Leistungshalbleiterschalter anfallende elektrische Spannung erfasst und/oder ein durch den Leistungshalbleiterschalter fließender elektrischer Strom. Mit anderen Worten werden diejenigen Betriebsdaten mittels des Leistungsteils erfasst, die mittels des Leistungsteils selbst beeinflusst werden. Vorzugsweise werden sämtliche derartige Betriebsdaten erfasst. Alternativ oder besonders bevorzugt in Kombination hierzu umfasst das Leistungsteil eine Temperaturerfassung, mittels deren geeigneterweise die Temperatur des Halbleiterschalters und/oder weiterer Komponenten des Leistungsteils, wie z.B. dessen zweites Gehäuse, überwacht wird. Die Temperaturerfassung ist zweckmäßigerweise mit einer Schaltung der ersten Flachbaugruppe realisiert. Vorzugsweise werden sämtliche Betriebsdaten, die mittels des Leistungsteils ermittelt sind, der Sicherheitsüberwachung bereitgestellt. Auf diese Weise ist ein vergleichsweise kurzer Signalweg zwischen der Ermittlung der Betriebsdaten und der Verarbeitung mittels der Sicherheitsüberwachung geschaffen, was eine Fehleranfälligkeit reduziert. Beispielsweise werden der Sicherheitsüberwachung weitere Betriebsdaten, insbesondere eine Drehzahl und/oder eine Lageinformation des etwaigen Rotors, bereitgestellt, die nicht mittels Komponenten des Leistungsteils ermittelt wurden. Insbesondere werden diese Betriebsdaten mittels der Diagnosefunktion, sofern diese vorhanden ist, unter Zuhilfenahme der mittels des Leistungsteils ermittelten Betriebsdaten verifiziert, was die Sicherheit erhöht.

Vorzugsweise weist die Bewegungsregelung eine Geberauswertung auf, die im Montagezustand zweckmäßigerweise mit einem Geber der elektrischen Maschine signaltechnisch gekoppelt ist. Mittels des Gebers wird die Drehzahl der elektrischen Maschine erfasst. Folglich werden mittels der Geberauswertung Betriebsdaten erstellt, die zu der Ist-Drehzahl der elektrischen Maschine korrespondieren. Infolgedessen ist eine im Wesentlichen unverzügliche Anpassung der Bewegung der elektrischen Maschine mittels des Umrichters bei einer Abweichung zwischen dem mittels der Geberauswertung erfassten Ist-Werten von vorgegebenen Soll-Werten möglich. Hierbei ist es nicht erforderlich, dass auf anderweitig bereitgestellte Betriebsdaten zurückgegriffen werden muss, was zu einer zeitlichen Verzögerung führen würde.

Geeigneterweise weist die Bewegungsregelung eine Drehzahlregelung, eine Lageregelung oder eine Positioniersteuerung auf. Mittels dieser ist es ermöglicht, die Position eines Rotors der elektrischen Maschine zu dem Stator, dessen Geschwindigkeit bzw. dessen Lage zu regeln, so dass der Zustand der elektrischen Maschine stets einem vorher definierten Zustand entspricht. Insbesondere umfasst die Bewegungsregelung zumindest zwei, insbesondere drei der einzelnen Regelungen, was zu einem vergleichsweise sicheren Betrieb der elektrischen Maschine führt. Geeigneterweise sind keine Hardwarefunktionen innerhalb der Bewegungsregelung realisiert, die speziell für das Leistungsteil angepasst sind. Mit anderen Worten ist kein Wissen um den Aufbau des Leistungsteils zum ordnungsgemäßen Betrieb des Regelteils erforderlich. Vorzugsweise werden die ermittelte Drehzahl und/oder die ermittelte Lage von der Bewegungsregelung zum Leistungsteil übertragen, insbesondere zur Sicherheitsüberwachung.

Insbesondere sind das Leistungsteil und das Regelteil mittels eines Bus-Systems signaltechnisch miteinander gekoppelt. Beispielsweise ist das Bus-System EtherCat, Open SAFETY, Sercos III oder ein sonstiges Industrial ethernet. Beispielsweise ist das Bus-System vorgesehen und eingerichtet, sicher gekapselte Telegramme zu übertragen. Mittels des Bus-Systems ist eine standardisierte Schnittstelle zwischen dem Regel- und dem Leistungsteil geschaffen, so dass ein Austausch der einzelnen Teile erleichtert ist. Diese müssen lediglich die Spezifikationen des jeweils verwendeten Bus-Systems erfüllen. Ferner ist ein Verkabelungsaufwand bei der Installation verringert. Insbesondere ist eine Prozesssteuerung ebenfalls mittels des Bus-Systems mit dem Regelteil signaltechnisch gekoppelt, was einerseits zu einer weiteren Modularisierung und andererseits zu einer vergleichsweise einfachen und Zeit sparenden Montage führt.

Mittels des Umrichters wird bevorzugt ein Elektromotor betrieben, wie ein Synchron oder Asynchronmotor. Geeigneterweise ist der Umrichter Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Nachfolgend werden Ausführungsbeispiele der Erfindung anhand einer Zeichnung näher erläutert. Darin zeigen:
- Fig.1: schematisch eine erste Ausführungsform eines Umrichters mit einem Regel- und einem Leistungsteil, mittels dessen eine elektrische Maschine angetrieben ist,
- Fig. 2: eine weitere Ausführungsform des Umrichters mit zwei Leistungsteilen,
- Fig. 3: eine erste Ausführungsform des Leistungsteils als erste Flachbaugruppe, und
- Fig. 4: fünf weitere Ausführungsformen des Leistungsteils, das jeweils eine zweite Flachbaugruppe aufweist.

Einander entsprechende Teile sind in allen Figuren mit den gleichen Bezugszeichen versehen.

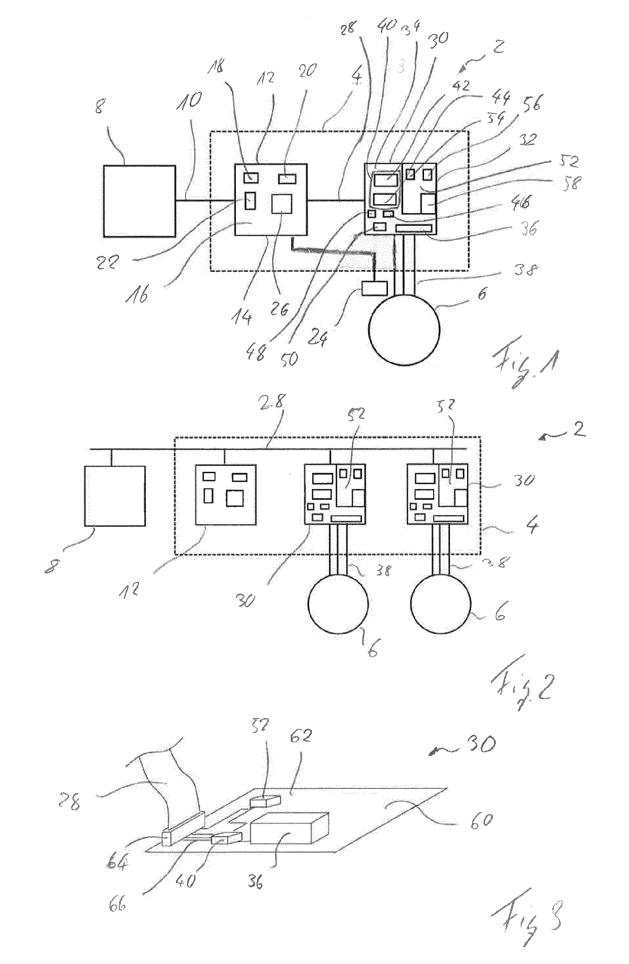

In Fig. 1 ist eine Industrieanlage 2 mit einem Umrichter 4 dargestellt, mittels dessen eine elektrische Maschine 6 betrieben ist. Die Steuerung der elektrischen Maschine 6 mittels des Umrichters 4 erfolgt anhand von Vorgaben einer Prozesssteuerung 8, die mittels eines ersten Bus-Systems 10 mit dem Umrichter 4 signaltechnisch gekoppelt ist. Die Vorgaben werden an ein Regelteil 12 des Umrichters 4 übertragen, das eine innerhalb eines ersten Gehäuses 14 angeordnete Bewegungsregelung 16 umfasst. Die Bewegungsregelung 16 ist mittels einer nicht näher dargestellten Flachbaugruppe realisiert. Die Bewegungsregelung 16 weist eine Drehzahlregelung 18, eine Lageregelung 20 und eine Positioniersteuerung 22 auf, mittels derer die Soll-Vorgaben der Prozesssteuerung 8 bearbeitet werden. Diese werden mittels aktuellen Ist-Werten der elektrischen Maschine 6 verglichen, nämlich einer Drehzahl, die mittels eines Drehgebers 24 der elektrischen Maschine 6 aufgenommen werden. Die Messdaten des Drehgebers 24 werden mittels einer Geberauswertung 26 erfasst und der Drehzahlregelung 18, der Lageregelung 20 sowie der Positioniersteuerung 22 zur Verfügung gestellt. Mittels derer wird eine Soll-Drehzahl erstellt, sodass die elektrische Maschine 6 in einen von der Prozesssteuerung 8 vorgegebenen Zustand gebracht wird.

Die Soll-Drehzahl wird mittels eines zweiten Bus-Systems 28 an ein Leistungsteil 30 mit einem zweiten Gehäuse 32 übertragen. Das zweite Gehäuse 32 ist zum ersten Gehäuse 14 beabstandet und in nicht näher dargestellter Art und Weise gegen Masse geführt. Innerhalb des zweiten Gehäuses 32 ist eine Leistungsschaltung 34 positioniert, die sechs Leistungshalbleiterschalter 36 umfasst. Die Leistungshalbleiterschalter 36 sind IGBTs mit hierzu parallel geschalteten Freilaufdioden und sind in einer Brückenschaltung, nämlich als B6-Schaltung, miteinander elektrisch kontaktiert. Hierbei sind die Leistungshalbleiterschalter 36 mit einem nicht näher dargestellten Zwischenkreis, an dem eine Gleichspannung anliegt, elektrisch kontaktiert. Der Zwischenkreis wird mit einer ebenfalls nicht dargestellten Gleichrichterseite gespeist, der seinerseits mit einem ebenfalls nicht dargestellten Stromnetz der Industrieanlage 2 elektrisch kontaktiert ist.

Mit anderen Worten wird ein mittels des Stromnetzes bereitgestellter Wechselstrom mittels der Gleichrichterseite zu einem Gleichstrom des Zwischenkreises transformiert, der seinerseits mittels der Halbleiterschalter 36 zu einem dreiphasigen Wechselstrom transformiert wird, mittels dessen die elektrische Maschine 6 betrieben wird. Hierfür ist das Leistungsteil 34 mit einer dreiphasigen Leitung 38 mit der elektrischen Maschine 6 elektrisch kontaktiert. Die Halbleiterschalter 36 werden mittels eines PWM-Modulators 40 mit Steuersignalen beaufschlagt, die die jeweiligen Leistungshalbleiterschalter 36 in einen elektrisch leitenden oder elektrisch nicht leitenden Zustand versetzen. Der PWM-Modulator weist sowohl eine Stromregelung 42 als auch eine Treiberschaltung 44 auf. Mittels der Stromregelung 42 wird ein zu dem mittels des Regelteils 12 vorgegebenen Soll-Drehzahl korrespondierender elektrischer Soll-Strom ermittelt und hieraus mittels der Treiberschaltung 44 korrespondierende Ansteuersignale für die Leistungshalbleiterschalter 36 erstellt.

Die Leistungsschaltung 34 weist ferner eine elektrische Spannungserfassung 46 und eine elektrische Stromerfassung 48 auf, mittels derer die mittels der Halbleiterschalter 36 bereitgestellte elektrische Spannung bzw. der elektrische Strom 42 erfasst wird. Diese Betriebsdaten werden der Stromregelung 42 bereitgestellt und hiervon ausgehend die Treiberschaltung 44 zur Verringerung der Differenz der mittels der elektrischen Stromerfassung 48 ermittelten elektrischen Ist-Strom zu der aus der vorgegebenen Soll-Drehzahl ermittelten elektrischen Soll-Strom angesteuert. Die Leistungsschaltung 34 weist ferner eine Temperaturerfassung 50 auf, mittels derer die Temperatur der Leistungshalbleiterschalter 36 überwacht wird, die einen bestimmten Betriebstemperaturbereich aufweisen.

Das Leistungsteil 30 umfasst ferner eine Sicherheitsüberwachung 52 mit einer ersten Sicherheitsfunktion 54 und einer zweiten Sicherheitsfunktion 56. Die erste Sicherheitsfunktion 54 ist eine sichere Drehzahlbegrenzung, mittels derer sichergestellt wird, dass eine Maximaldrehzahl der elektrischen Maschine 6 nicht überschritten wird. Hierfür werden einerseits die mittels der Geberauswertung 26 erfassten Betriebsdaten sowie die mittels des zweiten Bus-Systems 28 übermittelte Soll-Drehzahl mit der maximal erlaubten Drehzahl verglichen. Bei aktivierter erster Sicherheitsfunktion 56 und Überschreiten der Maximaldrehzahl durch entweder die erfasste Drehzahl oder die vorgegebene Drehzahl, wird der PWM-Modulator 40 mittels der Sicherheitsüberwachung 52 angesteuert und die Treiberschaltung 44 direkt oder die Stromregelung 42 derart beeinflusst, dass die Drehzahl der elektrischen Maschine 6 unterhalb der Maximaldrehzahl verbleibt. Beispielsweise werden hierfür die mittels der Treiberschaltung 44 erstellten Signale zeitlich verkürzt oder für eine bestimmte Zeitspanne gesperrt, also die Signale ausgesetzt, so dass die Halbleiterschalter 36 für diese Zeitspanne in einen elektrisch nicht leitenden Zustand verbleiben.

Die zweite Sicherheitsfunktion 56 ist ein sicheres Stillsetzen der elektrischen Maschine 6. Bei Aktivierung der zweiten Sicherheitsfunktion 56 werden sämtliche mittels der Treiberschaltung 54 erstellten Signale gelöscht und folglich die Halbleiterschalter 36 im Wesentlichen unverzüglich in einen elektrisch nicht leitenden Zustand versetzt. Sofern bei Aktivierung der zweiten Sicherheitsfunktion 56 die elektrische Maschine 6 noch eine Bewegung aufweist, trudelt diese folglich momentenlos aus.

Die Sicherheitsüberwachung 52 umfasst ferner eine Diagnosefunktion 58, mittels derer bei Anfahren der Industrieanlage 2, also bei Einsetzen der Bestromung des Umrichters 4 sowie Versetzen des Umrichters 4 in einen Stand-by- oder Betriebsmodus die ordnungsgemäße Funktionsweise der ersten und zweiten Sicherheitsfunktion 54,56 sowie des PWM-Modulators 40 und der elektrischen Spannungserfassung 56 als auch elektrischen Stromerfassung 48 überprüft wird. Sollte Beispielseise die elektrische Stromerfassung 48 fehlerhaft sein und einen von 0 Ampere abweichenden Wert trotz nicht aktivierter Leistungshalbleiterschalter 36, also bei Ausbleiben von mittels des PWM-Modulators 40 erstellten Signalen, erfasst werden, wird unverzüglich die zweite Sicherheitsfunktion 56 aktiviert und eine Fehlermeldung ausgegeben. Diese wird beispielsweise mittels einer Anzeige, wie einer Leuchte, signalisiert und mittels des ersten und zweiten Bus-Systems 10,28 an die Prozessteuerung 8 übertragen.

Der Umrichter 4 ist modular aufgebaut, wobei sowohl ein Austausch des Regelteils 12 als auch des Leistungsteils 30 ermöglicht ist, ohne dass das verbleibende Teil hierfür speziell angepasst werden muss. Es muss lediglich die Busverbindung 28 zum Austausch getrennt und nach erfolgtem Austausch erneut hergestellt werden. Auch ist es ermöglicht, die Sicherheitsüberwachung 52 gegen eine anderweitige Sicherheitsüberwachung 52 auszutauschen, deren Anzahl an Sicherheitsfunktionen verändert ist. So weist eine hier nicht dargestellte Sicherheitsüberwachung 52 eine Sicherheitsfunktion auf, die die elektrische Maschine 6 gesteuert zu einem Stillstand bringt. Mit anderen Worten ist die Sicherheitsfunktion ein sicherer Stopp. Jede der Austauschsicherheitsüberwachungen 52 weist hierbei insbesondere die zweite Sicherheitsfunktion 56 auf, nämlich das sichere Stillsetzen. Beispielsweise wird nach Montage die Sicherheitsüberwachung 52 mittels der Prozesssteuerung 8 über die beiden Bus-Systeme 10, 28 oder mittels der Leistungsschaltung 34 eingestellt und parametrisiert

In Fig. 2 ist eine weitere Ausführungsform des Umrichters 4 dargestellt. Der Umrichter 4 weist zwei Leistungsteile 30 auf, denen jeweils eine elektrische Maschine 6 zugeordnet ist. Die Ausgestaltung der Leitungen 38, der elektrischen Maschinen 6 und der Leistungsteile 30 entspricht der in der vorigen Ausführungsform dargestellten Ausführung, auch wenn der jeweilige Drehgeber 24 nicht dargestellt ist. Auch das Regelteil 12 entspricht dem in Fig. 1 gezeigten Regelteil 12. Mit anderen Worten ist der in Fig. 1 gezeigte Umrichter 4 um ein weiteres Leistungsteil 30 und die Industrieanlage 2 um eine weitere elektrische Maschine 6 erweitert. Das zweite Bussystem 28 ist derart verändert worden, dass nunmehr beide Leistungsteile 28 mittels des zweiten Bus-Systems 28 mit dem Regelteil 12 signaltechnisch gekoppelt sind. Auch ist das erste Bus-System 10 weggelassen und die Prozesssteuerung 8 ebenfalls mit dem zweiten Bus-System 28 gekoppelt. Die jeweiligen Sicherheitsüberwachungen 52 der beiden Leistungsteile 30 werden mittels des zweiten Bus-Systems 28 bei Montage parametrisiert und die jeweilige Sicherheitsfunktion 54,56 mittels des zweiten Bus-Systems 58 aktiviert. Mittels der Prozesssteuerung 8 werden hierfür geeignete Signale in das zweite Bus-System 28 eingespeist.

In Fig. 3 ist eine Ausführungsform des Leistungsteils 30 dargestellt, wobei das zweite Gehäuse 32 weggelassen ist. Das Leistungsteil 30 weist eine erste Flachbaugruppe 60 mit einer ersten Platine 62 auf, an der die Leistungshalbleiterschalter 36 angelötet sind, von denen lediglich ein einziger dargestellt ist. An der ersten Leiterplatte 62 sind ferner der PWM-Modulator 40 und ein Stecker 64 angelötet, der als Verbindung zum zweiten Bus-System 28 dient. Der Stecker 64, der PWM-Modulator 40 und die Halbleiterschalter 36 sind mittels Leiterbahnen 66 elektrisch miteinander kontaktiert. Die erste Flachbaugruppe 60 weist ferner die Sicherheitsüberwachung 52 in Form eines integrierten Schaltkreises auf, der ebenfalls mittels der Leiterbahnen 66 sowohl mit dem Stecker 64 und dem PWM-Modulator 40 elektrisch kontaktiert ist.

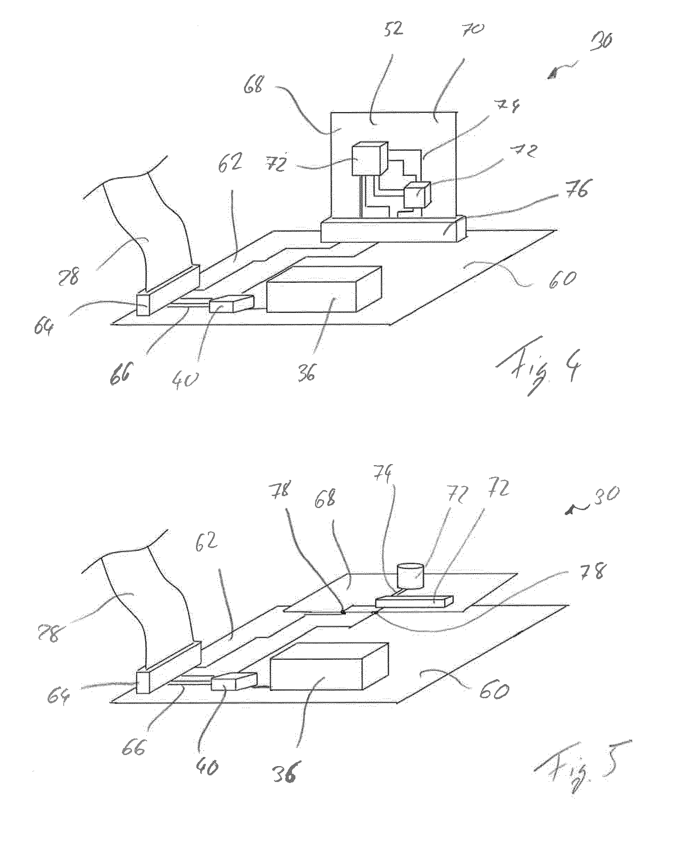

In Fig. 4 ist eine weitere Ausführungsform des Leistungsteils 30 mit der ersten Flachbaugruppe 60 dargestellt. Mit Ausnahme der Sicherheitsüberwachung 52 entspricht die Ausgestaltung der ersten Flachbaugruppe 60 der in Fig. 3 gezeigten Variante. Mit anderen Worten ist der die Sicherheitsüberwachung 52 bildende integrierte Schaltkreis weggelassen. Die Sicherheitsüberwachung 52 weist eine zweite Flachbaugruppe 68 mit einer zweiten Leiterplatte 70 auf, an der eine Anzahl elektrischer und/oder elektronischer Bauteile 72 angelötet sind, die mittels Leiterbahnen 74 miteinander kontaktiert sind. Die Bauteile 72 umfassen einen programmierbaren Mikroprozessor. Die zweite Flachbaugruppe 68 ist nach Art einer Austauschleiterplatte ausgestaltet und in einen Steckverbinder 76 der ersten Flachbaugruppe 60 gesteckt, der mittels der Leiterbahn 66 der ersten Leiterplatte 62 sowohl mit dem Stecker 74 als auch mit dem PWM-Modulator 40 elektrisch kontaktiert ist. Eine derartige Ausgestaltung des Leistungsteils 30 erlaubt ein vergleichsweise einfaches und schnelles Ersetzen der Sicherheitsüberwachung 52.

In Fig. 5 ist eine weitere Ausgestaltung des Leistungsteils 30 mit der ersten Flachbaugruppe 60 und der zweiten Flachbaugruppe 68 dargestellt. Mit Ausnahme des Steckverbinders 76 entspricht die erste Flachbaugruppe der in Fig. 4 gezeigten Ausführungsform. Mit der in Fig. 5 dargestellten Sicherheitsüberwachung 52 wird lediglich die zweite Sicherheitsfunktion 56 realisiert. Auch ist die Diagnosefunktion 58 nicht vorhanden. Die zweite Flachbaugruppe 68 weist keine integrierten Schaltkreise, sondern lediglich diskrete elektrische Bauteile 72 auf, die mittels der Leiterbahnen 74 miteinander elektrisch kontaktiert sind. Die zweite Flachbaugruppe ist folglich lediglich diskret aufgebaut und mittels Lötverbindungen 78 an der ersten Flachbaugruppe 60 befestigt. Die Lötverbindungen 78 dienen einerseits der mechanischen Befestigung und andererseits der elektrischen Kontaktierung der beiden Flachbaugruppen 60,68 miteinander.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Industrieanlage
- 4: Umrichter
- 6: elektrische Maschine
- 8: Prozesssteuerung
- 10: erstes Bussystem
- 12: Regelteil
- 14: erstes Gehäuse
- 16: Bewegungsregelung
- 18: Drehzahlregelung
- 20: Lageregelung
- 22: Positioniersteuerung
- 24: Drehgeber
- 26: Geberauswertung
- 28: zweites Bussystem
- 30: Leistungsteil
- 32: zweites Gehäuse
- 34: Leistungsschaltung
- 36: Leistungshalbleiterschalter
- 38: Leitung
- 40: PWM-Modulator
- 42: Stromregelung
- 44: Treiberschaltung
- 46: elektrisch Spannungserfassung
- 48: elektrische Stromerfassung
- 50: Temperaturerfassung
- 52: Sicherheitsüberwachung
- 54: erste Sicherheitsfunktion
- 56: zweite Sicherheitsfunktion
- 58: Diagnosefunktion
- 60: erste Flachbaugruppe
- 62: erste Leiterplatte
- 64: Stecker
- 66: Leiterbahn
- 68: zweite Flachbaugruppe
- 70: zweite Leiterplatte
- 72: elektrische/elektronische Bauteile
- 74: Leiterbahn
- 76: Steckverbinder
- 78: Lötverbindung

## Patentansprüche

1. Umrichter (4) mit einem eine Bewegungsregelung (16) aufweisenden Regelteil (12) und einem einen Leistungshalbleiterschalter (36) umfassenden Leistungsteil (30), wobei das Leistungsteil (30) eine eine Sicherheitsfunktion (54, 56) bereitstellende Sicherheitsüberwachung (52) aufweist.

2. Umrichter (4) nach Anspruch 1,
**dadurch gekennzeichnet,**
**dass** das Leistungsteil (30) eine den Leistungshalbleiterschalter (36) aufweisende erste Flachbaugruppe (60) umfasst.

3. Umrichter (4) nach Anspruch 2,
**dadurch gekennzeichnet,**
**dass** die erste Flachbaugruppe (60) die Sicherheitsüberwachung (52) aufweist.

4. Umrichter (4) nach Anspruch 2,
**dadurch gekennzeichnet,**
**dass** die Sicherheitsüberwachung (52) eine zweite Flachbaugruppe (68) aufweist, die an der ersten Flachbaugruppe (60) befestigt ist, insbesondere steckbar oder angelötet.

5. Umrichter (4) nach einem der Ansprüche 1 bis 4,
**dadurch gekennzeichnet,**
**dass** die Sicherheitsfunktion (54, 56) eine sichere Drehzahlbegrenzung oder ein sicheres Stillsetzen ist.

6. Umrichter (4) nach einem der Ansprüche 1 bis 5,
**dadurch gekennzeichnet,**
**dass** die Sicherheitsüberwachung (52) eine Diagnosefunktion (58) aufweist.

7. Umrichter (4) nach einem der Ansprüche 1 bis 6,
**dadurch gekennzeichnet,**
**dass** das Leistungsteil (30) eine Stromregelung (42) und/oder eine Treiberschaltung (44), insbesondere einen PWM-Modulator (40), aufweist, mittels derer der Leistungshalbleiterschalter (36) gesteuert ist.

8. Umrichter (4) nach einem der Ansprüche 1 bis 7,
**dadurch gekennzeichnet,**
**dass** das Leistungsteil (30) eine elektrisch Spannungserfassung (46), Temperaturerfassung (50) und/oder elektrisch Stromerfassung (48) aufweist.

9. Umrichter (4) nach einem der Ansprüche 1 bis 8,
**dadurch gekennzeichnet,**
**dass** die Bewegungsregelung (16) eine Geberauswertung (26), ein Drehzahlregelung (18), eine Lageregelung (20) und/oder eine Positioniersteuerung (22) aufweist.

10. Umrichter (4) nach einem der Ansprüche 1 bis 9,
**dadurch gekennzeichnet,**
**dass** das Leistungsteil (30) und das Regelteil (12) mittels eines Bus-Systems (28) signaltechnisch gekoppelt sind.
